# EUROPÄISCHE PATENTSCHRIFT

(11) **EP 4 001 138 B1**
(45) Veröffentlichungstag und Bekanntmachung des Hinweises auf die Patenterteilung: **26.07.2023**
(21) Anmeldenummer: 20209277.1
(22) Anmeldetag: 23.11.2020
(51) Int. Cl.: B65B 51/14, B65B 65/08, B29C 65/00, B65B 57/18, B65B 57/00

(54) **MANUELLES SIEGELGERÄT MIT ERWEITERTEM FUNKTIONSUMFANG**
MANUAL SEALER WITH EXTENDED FUNCTIONALITY
APPAREIL DE SCELLAGE MANUEL À FONCTIONNALITÉ ÉTENDUE

(43) Veröffentlichungstag der Anmeldung: 25.05.2022
(73) Patentinhaber: A.L.X.-Metall, Verpackungstechnik, Dipl.-Ing. Alexander Josek GmbH, 36358 Herbstein (DE)
(72) Erfinder: Josek, Armin-Carsten, 36358 Herbstein (DE); Schmelz, Bernhard, 36341 Lauterbach (DE); Kehl, Karsten, 36100 Petersberg (DE)
(74) Vertreter: Reinhardt, Thomas Johannes

(56) Entgegenhaltungen:
- WO-A1-2012/145789
- CN-A- 107 176 335
- CN-A- 110 451 022
- DE-B3-102007 052 543
- GB-A- 2 360 733
- KR-A- 20180 006 642

## Beschreibung

### STAND DER TECHNIK

Die vorliegende Erfindung betrifft ein Siegelgerät, das für die Versiegelung einzelner Behältnisse, insbesondere einzelner Verpackungsschalen durch Versiegeln des Behältnisses mit einer Verschlussfolie mittels manueller Bedienung der einzelnen Versiegelungsvorgänge eingerichtet ist.

Die eingangs genannten Geräte werden häufig in (Schnell)- Imbissbetrieben oder in der Gastronomie eingesetzt, zu denen Endkunden kommen, die eine fertig vorbereitete Mahlzeit mitnehmen möchten. Sie finden aber auch anderweitig Anwendung, etwa in Großküchen, in denen einzelne Mahlzeiten portionsweise abgefüllt und versiegelt werden, etwa bei der Seniorenverpflegung in Altenheimen oder in Krankenhäusern, etc..

Die Hygieneanforderungen an die räumlichen und arbeitstechnischen Bedingungen beim Abfüllen von Lebensmitteln sind in den letzten Jahren aufgrund von diversen Lebensmittelskandalen gestiegen. Die Lebensmittel sollen nach Möglichkeit "rein" sein. Dazu gehört, dass sie auf ihrem Weg von der Erzeugung über die Zubereitung und im letzten Zugriff durch den Händler oder Abfüller bzw. die verpackende Fachkraft möglichst mit nur geringem manuellen Kontakt verarbeitet und insgesamt schonend behandelt werden. Die Ware soll frisch aussehen, aber gleichzeitig möglichst naturbelassen sein, weshalb man zunehmend auch auf chemische Konservierungsstoffe weitgehend verzichten möchte. Für die Menschen, die bei Ernte, Erzeugung, Verarbeitung, ggf der Zubereitung und der Abfüllung der Lebensmittel oder der Zubereitungen beteiligt sind, wird es immer schwieriger, dabei keine Fehler zu machen, denn die Folgen von Fehlern können vielfältig sein: Druckstellen, Fäulnis und mangels Konservierungsmittel Schimmel. Die zusätzlichen Anforderungen zum Schutz vor Ausbreitung gefährlicher Viren wie dem Coronavirus Sars Covid19 verschärfen die Problematik.

Eine Schlüsseltätigkeit ist dann die Übergabe an den Endverbraucher, wenn die Lebensmittel in einer Verpackung, insbesondere in einer Frischhalteschale abgepackt sind. Eine transparente oder blickdichte Verschlussfolie ist dabei mit der Schale versiegelt. Die Versiegelung muss perfekt, insbesondere auslaufsicher sein, sonst nimmt die Ware frühzeitig Schaden oder ggf. vorhandene Flüssigkeit tröpfelt heraus.

Solange die Ware in einer großen, teuren Anlage abgepackt worden ist, lohnt sich der Aufwand für das verpackende Unternehmen, viel Geld und technischen Aufwand in die Anlage zu stecken, die die Ware verpackt.

Kleinere Unternehmen jedoch, die ebenfalls Lebensmittel verpacken und mit einer Folie in einer Schale liegend versiegeln, können sich solch teure, qualitativ hochwertige Abfüll- und Versiegelanlagen nicht leisten und sie machen dort aufgrund der geringeren Stückzahlen auch keinen Sinn. Sie füllen die Ware manuell in eine Verpackungsschale und versiegeln die Ware manuell mit einer über die Ware gezogene Verschlussfolie, die mit dem Rand der Schale mittels eines der eingangs genannten Siegelgeräte versiegelt wird. Da es hierbei vielerlei technische Parameter zu beachten gilt, und es im Endverkauf angesichts der oft ungeduldig wartenden Endkunden manchmal recht hektisch zugeht, unterlaufen dem beteiligten Personal bei einfach ausgestatteten Siegelgeräten oftmals Fehler. So sind manchmal mangels genau eingestellter Siegeltemperatur oder Siegelzeit oder mangels genau eingestelltem Siegeldruck die Siegelnähte undicht, oder die Folie lässt sich nicht mühelos und ästhetisch sauber von der Schale abziehen. Beides macht den Endkunden unzufrieden. GB 2360733 A offenbart auch ein Gerät nach Oberbegriff des Anspruchs 1. CN 110451022 A offenbart ein Verfahren zum Steuern von Siegeleinrichtungen durch eine Serverapplikation. Diese Anforderungen sind im hektischen Betrieb gegebenenfalls vis-á-vis von ungeduldig wartenden Endkunden, mit fettigen Händen beim Bedienpersonal, mit manchmal nur geringen Sprachkenntnissen des Bedienpersonals, mit manchmal hoher Temperatur der Ware, mit unterschiedlichen Materialien für Schale und Verschlussfolie und mit entsprechenden unterschiedlichen Parameterbereichen für Siegeltemperatur, Siegeldruck und Siegeldauer noch schwerer zu erfüllen.

Die Fachwelt hat bisher - trotz erhöhter Sensibilität durch die Covid 19 Pandemie nicht die Aufgabe der vorliegenden Erfindung erkannt, dass es sinnvoll wäre, technisch sehr hochwertige Siegelgeräte, die den vorgenannten hohen Anforderungen besser gewachsen sein sollen, auch für kleinere Unternehmen wie Imbissbetriebe und Metzgereigeschäfte zugänglich zu machen. Daher besteht die technische Aufgabe der Erfindung darin, solche technisch hochwertigen Siegelgeräte, die für den manuellen Betrieb eingerichtet sind und die dem Bediener die oben genannten Probleme vermindern, so auszurüsten, dass sie für kleinere Unternehmen mit geringem oder mit schlecht kalkulierbarem Umsatz attraktiv sind.

### VORTEILE DER ERFINDUNG

Der erfindungsgemäße Gegenstand mit den Merkmalen des Anspruchs 1 löst diese Aufgabe.

In den Unteransprüchen finden sich vorteilhafte Weiterbildungen und Verbesserungen des jeweiligen Gegenstandes der Erfindung.

Einem ersten Gedanken der vorliegenden Erfindung folgend ist das Siegelgerät mit einer Steuer-und Auswerteelektronik sowie einer online-Schnittstelle ausgestattet, die es erlauben, die erfolgten Siegelungsvorgänge mitzuzählen und einen Bezahlvorgang einzuleiten, der nur dann erfolgen soll, wenn eine bestimmte Anzahl an Siegelvorgängen erreicht worden ist. Dieses "pay-per-use"- Merkmal ermöglicht dem das Siegelgerät einsetzenden Betrieb, nur soviel Gerätenutzung zu bezahlen, wie er das Gerät auch benutzt hat. Der das Siegelgerät einsetzende Betrieb hat also nur variable Kosten des Geräts zu tragen und hat daher eine sichere, betriebswirtschaftliche Kalkulationsgrundlage. Gleichzeitig profitiert er aber während der Nutzung des Siegelgerätes von dessen hoher technischer Qualität und ist imstande, mit geringem Einarbeitungsaufwand für das Personal ein relativ sicheres und hygienisch verbessertes Versiegeln der Schalen zu ermöglichen.

Es wird ein Siegelgerät offenbart zum manuellen Versiegeln von Verpackungseinheiten miteinander entlang einer vorgegebenen Kontur, mit einem vom Bediener des Gerätes beschickbaren Bereich in einem Bodenteil des Gerätes zum Einlegen einer mit Lebensmitteln gefüllten Schale, deren Rand der genannten Kontur folgt, und mit einem manuell bedienbaren Oberteil, das bei einem durch Versiegeln erfolgenden Versiegelungsvorgang eine Verschlussfolie auf die Kontur drückt, wobei das Siegelgerät dadurch gekennzeichnet ist, dass es
eine Sensoreinrichtung aufweist, die dazu eingerichtet ist, die Durchführung eines Siegelvorgangs zu sensieren, und
eine Sendeeinheit aufweist zum Herstellen einer Sendeverbindung, um Daten über die mit dem Gerät durchgeführte Anzahl von Siegelvorgängen an einen vorgegebenen Empfänger zu senden.

Die Sensoreinrichtung kann vorzugsweise aus mehreren Einzelsensoren bestehen. Beispielsweise enthält sie einen oder mehrere Temperatursensoren, die die an der Kontur vorliegende Temperatur messen, einen Drucksensor, der den Druck des Oberteils auf eine oder mehrere Stellen der Kontur misst, entlang der der Siegelvorgang erfolgt, und ein optisches Sensorsystem, das registriert, wenn der Deckel vom offenen Zustand in den geschlossenen Zustand hindurchgeht, bei dem der Kontursiegelvorgang stattfinden soll.

Liefern alle drei der vorgenannten Sensoren Signale, die eindeutig auf einen Siegelvorgang schließen lassen, so erzeugt eine Auswerteelektronik, die die vorgenannten Sensorsignale automatisch auswertet, einen Zählimpuls, der einen Siegelvorgang repräsentiert. Bei Erreichen einer vorgegebenen Anzahl Siegelvorgänge wird der Zählerstand über die vorgenannte online-Schnittstelle an einen Webserver des Gerätelieferanten übertragen. Dieser kann dann einen automatisierten Zahlungsvorgang einleiten, so dass der Betreiber des Geräts eine nutzungsbezogene Geldsumme an den Lieferanten zahlt.

Ebenso wird die Verwendung eines Nachrüstsatzes offenbart, mit dem vorhandene Siegelgeräte nachgerüstet werden können. Der Nachrüstsatz enthält dabei im Wesentlichen alle Komponenten, die als erfindungscharakteristisch für das Siegelgerät oben beschrieben wurden oder weiter unten beschrieben und erwähnt werden.

### ZEICHNUNGEN

Ausführungsbeispiele der Erfindung sind in den Zeichnungen dargestellt und in der nachfolgenden Beschreibung näher erläutert.

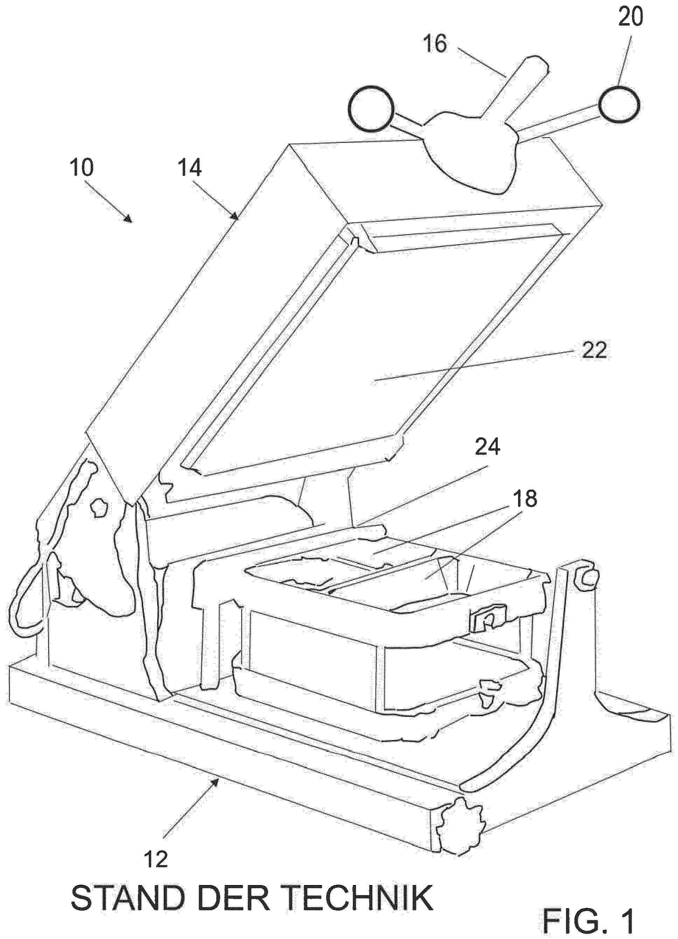

Figur 1 zeigt in einer schematischen und vereinfachten Darstellung ein Siegelgerät gemäß Stand der Technik.
Figur 2 zeigt in einer schematischen und vereinfachten Darstellung ein Siegelgerät gemäß der vorliegenden Erfindung.
Figur 3 zeigt ein Strukturdiagramm mit den wesentlichen funktionalen Komponenten eines Siegelgerätes aus Figur 2, sowie den wesentlichen Softwarekomponenten einer App, die mit einem Webserver und einer Kundendatenbank in Verbindung steht.
Figur 4 zeigt ein Ablaufdiagramm mit Schritten zur Ausführung in der Auswertelogik und dem Steuerkreis in dem Siegelgerät gemäß Ausführungsbeispiel.

### BESCHREIBUNG DER AUSFÜHRUNGSBEISPIELE

In den Figuren bezeichnen gleiche Bezugszeichen gleiche oder funktionsgleiche Komponenten.

Ein Siegelgerät 10 weist als Hauptkörper ein Geräteunterteil 12 und als Geräteoberteil ein Oberteil 14 mit einem Handgriff 16 auf. Das Oberteil 14 ist an der Hinterkante des Gehäuses 12 mit einem Schwenkgelenk schwenkbar verbunden. Das Gehäuse 12 enthält im Wesentlichen die im Stand der Technik bekannten Einrichtungen, um vorbestimmte Kunststoffe wie Polyethylen, Pulp, PS, PP, PLA, Mischstoffe, Palmblatt und andere Kunststoffe oder Papier, Pappe, Faserstoffe, Aluminium, Glas, Keramik mit einer dünnen, durchsichtigen Kunststofffolie durch Versiegeln miteinander längs einer Kontur zu verbinden.

Im Geräteunterteil ist ein als Wenderahmen 18 ausgebildeter Rahmen eingesetzt. Dieser Wenderahmen ist so geformt, dass eine Verpackungsschale mit ihren Außenwandungen genau passend in den Wenderahmen eingelegt werden kann, so dass die Außenwandungen der Schale an den korrespondierenden Innenwandungen des Wenderahmens flächenparallel aneinander anliegen, und eine mit Lebensmitteln befüllte Schale von oben mit einer Verschlussfolie bedeckt und durch das Oberteil 14 versiegelt werden kann, wenn es in seine waagerechte Endlage herabgeschwenkt ist. Wendet man ihn, so passen seine Innenkonturflächen zu einer anders geformten Verpackungsschale.

Eine drehbare Verschlusseinheit 20 bewirkt zunächst eine Verriegelung des Oberteils 14 am Geräteunterteil 12. Um einen genau definierten, vorangestellten Siegeldruck einer Siegelkontaktfläche 22, die die Unterseite des Oberteils bildet, auf die zu versiegelnde Folie auszuüben, die ihrerseits an der nach oben gerichteten Randkontur der Verpackungsschale anliegt und den entsprechenden Gegendruck aufrechterhält, ist ein elektrisch betriebener Drückmechanismus vorgesehen, der das Oberteil 14 mit der Siegelkontaktfläche 22 über die eingelegten, miteinander zu versiegelnden Verpackungsmaterialien entlang der vorgegebenen Kontur auf die nach oben ragenden Ränder des Wenderahmens drückt. Der Druck wird über einen Elektromotor erzeugt, der das Oberteil 14 nach der manuell an den Griffen der Verschlusseinheit 20 erfolgten Verriegelung über einen an seiner Achse befindlichen Exzenter auf die unterseitigen Ränder des Wenderahmens drückt. Je größer der Strom, der durch den Elektromotor fließt, desto höher ist der ausgeübte Druck. Der physikalisch wirksame Druck auf die zu versiegelnden Konturlinien ergibt sich durch einen vorausgegangen Kalibrierprozess aus der jeweiligen Stromstärke. Die Geometrie der Siegelkontaktfläche 22 sorgt dafür, dass der Druck entlang der Konturlinien im Wesentlichen überall derselbe ist, egal an welcher Stelle der Kontur man messen würde.

Die Siegelkontaktfläche 22 ist auf eine voreingestellte Temperatur aufgeheizt, die zum Material der Verpackungsschale und der Folie passt. Ein elektrisches Heizelement ist im Inneren des Geräteoberteils 14 vorhanden und in einem effizienten Wärmeleitungskontakt stehend mit der Siegelkontaktfläche 22 verbunden. Die Siegelkontaktfläche 22 wird im Betrieb über die Heizpatrone auf eine zum Material passende Soll-Siegeltemperatur aufgeheizt. Ein Thermostat misst die Temperatur und hält die elektrische Zuheizung aufrecht oder unterbricht sie, um die Siegelkontaktfläche in einem eng eingegrenzten, materialspezifischen Temperaturintervall halten zu können, wie es für eine mängelfreie Versiegelung notwendig ist.

Die Verschlussfolie kann als Rolle im hinteren Bereich des Geräteunterteils 12 aufgehängt werden und von dort abgerollt werden. Eine Trenneinrichtung 24 mit einer gezahnten Klinge trennt das versiegelte Folienstück von dem Rollenmaterial ab, wenn der Siegelvorgang durchgeführt wird.

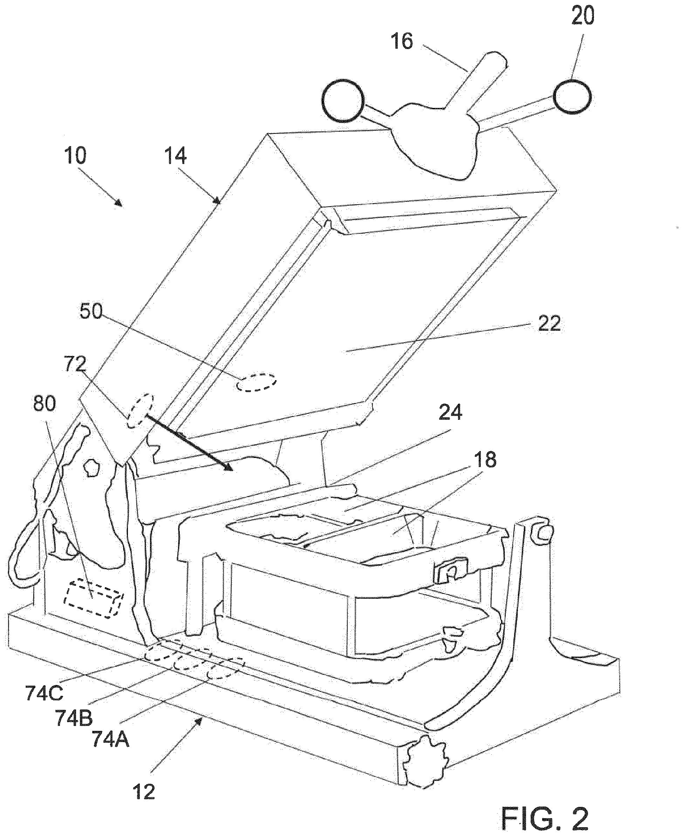

Figur 2 zeigt in einer schematischen und vereinfachten Darstellung ein Siegelgerät gemäß der vorliegenden Erfindung.

Gemäß Ausführungsbeispiel sind nun einige Sensoren vorgesehen, die dazu verwendet werden, einen Siegelvorgang zu detektieren. Die Herausforderung besteht dabei darin, das Siegelgerät technisch so robust auszustatten, dass es im anspruchsvollen Betrieb mit evtl. heißer, fettiger Ware, hohen Temperaturen und eventuell hektisch und grob durchgeführten Bedienhandhabungen lange einwandfrei funktioniert und betrugssicher ausgeführt ist.

Ein Temperatursensor 50 misst die Temperatur, die an der elektrisch beheizten Siegelkontaktfläche 22 anliegt. Er ist dafür bevorzugt direkt oberhalb der Siegelkontaktfläche positioniert, an einer vor mechanischen Störungen beim Versiegelvorgang oder beim Einlegen der Verpackungskomponenten geschützten Stelle im Inneren des Geräteoberteils.

Der Druck während des Siegelvorgangs wird über die vorgenannte Kalibrierung erfasst.

Ein optisches Sensorsystem 70 enthaltend einen LED-Strahlenerzeuger 72 und mehrere Photodioden 74 ist zwischen dem schwenkbarem Oberteil 14 und dem Gehäuseunterteil 12 wirksam. Es sensiert die Bewegung, wenn das Oberteil 14 geschlossen wird, in drei Stufen. Alternativ oder zusätzlich ist ein elektrischer Anschlagkontakt im Inneren des Schwenkgelenks verbaut, der jedes Mal einen neuen Zählimpuls erzeugt, wenn das Oberteil in die zum Siegeln benötigte Stellung verschwenkt wird. Dies lässt auf einen Siegelvorgang schließen.

Zusätzlich kann auch noch ein weiterer, ggf temperaturkompensierter Drucksensor vorgesehen sein, um eine erhöhte Kontrolle zu ermöglichen.

Ein Beschleunigungssensor ist im Oberteil 14 verbaut und misst die Beschleunigung beim Ingangsetzen und beim abrupten Stoppen der Schwenkbewegung, wenn das Oberteil 14 in Kontakt mit dem Wenderahmen kommt.

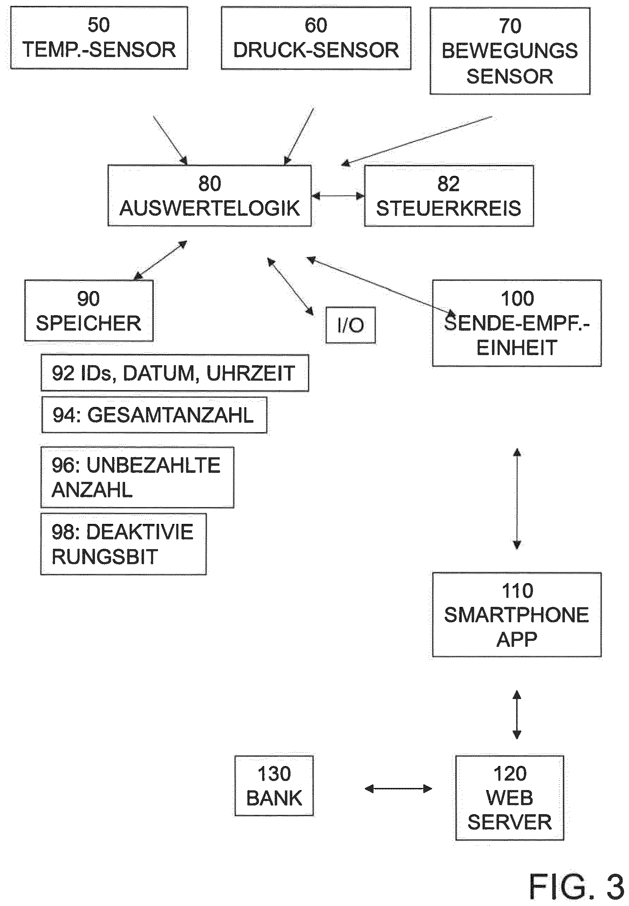

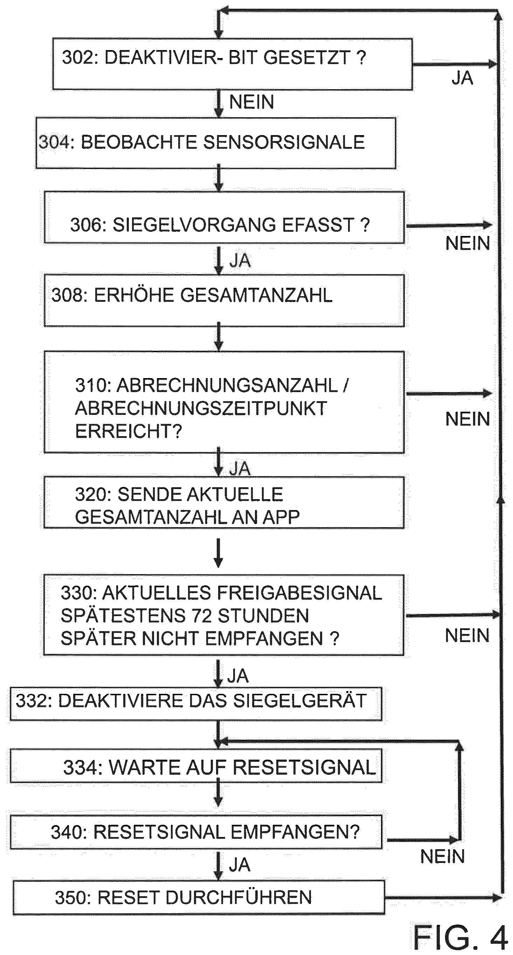

Alle Sensoren sind mit ihren Signalleitungskabeln mit entsprechenden Eingängen eines programmierten Mikrochips verbunden, in dem die Verarbeitung und die Auswertung der erfassten Sensorsignale durchgeführt wird. Somit sind Einrichtungen vorhanden, die Daten für Temperatur der Siegelkontaktfläche 22, Druck an der Siegelkontaktfläche 22, die Zeitspanne, während der der Druck aufrechterhalten wird, und die Informationen aus dem optischen System und gegebenenfalls des oben erwähnten elektrischen Schwenkanschlags erfassen können und elektronisch programmgesteuert auswertbar machen. Einzelheiten dazu werden mit Figur 3 und mit Figur 4 erläutert.

Figur 3 zeigt ein Strukturdiagramm mit den wesentlichen funktionalen Komponenten eines Siegelgerätes aus Figur 2, sowie den wesentlichen Softwarekomponenten einer App, die mit einem Webserver und einer Kundendatenbank in Verbindung steht.

Figur 4 zeigt ein Ablaufdiagramm mit Schritten zur Ausführung in der Auswertelogik und dem Steuerkreis in dem Siegelgerät gemäß Ausführungsbeispiel.

Eine erfindungsgemäß vorgesehene elektronische Auswerteeinheit 80 ist an der Geräterückseite unter einer Abdeckung in einem Gehäuse verbaut. Sie ist als programmierter Microcontroller ausgebildet und wertet die von den oben erwähnten Sensoren erzeugten Signale aus, um die Anzahl der in einem vorbestimmten Zeitraum (zum Beispiel ein Tag, eine Woche oder ein Monat) tatsächlich durchgeführten Siegelvorgänge zu erfassen. Die Auswerteeinheit 80 ist vorzugsweise zusammen mit einem Steuerkreis 82 für das Siegelgerät implementiert und so programmiert, dass der Steuerkreis 82 das Siegelgerät deaktiviert, wenn ein sogenanntes Freigabesignal wegen mangelnder Bezahlung der bereits erfolgten Siegelvorgänge nicht empfangen wird. Dazu werden weitere Details weiter unten beschrieben.

Eine Geräte-ID für das Siegelgerät, eine ID für den Namen des Gerätebenutzers, das aktuelle Datum und die Uhrzeit sind in einem Feld 92 eines Speichers 90 des Microcontrollers permanent gespeichert. Die Summe der ab einem bestimmten "Zeitpunkt Null", der dem Abrechnungsbeginn entspricht, erfassten Siegelvorgänge werden als Gesamtanzahl in einem Feld 94 gespeichert und von einer im Microcontroller implementierten Bluetooth-Sende- und Empfangseinheit 100 zu einem Smartphone des Gerätebenutzers übertragen und von einer dort installierten App 110 empfangen und weiterverarbeitet. Die Hauptaufgabe der App 110 besteht darin, die aktuelle Anzahl der erfassten Siegelvorgänge zu Abrechnungszwecken auf einen Webserver 120 des Gerätelieferanten zu übertragen. Eine Nebenaufgabe der App besteht darin, auch andere Daten zu sammeln, die den Gerätezustand einschlägig beschreiben und so auf einen bevorstehenden Wartungsbedarf am Gerät hinweisen. So kann rechtzeitig, bevor das Gerät ausfällt, ein Ersatzgerät geliefert werden.

Der Webserver 120 kann eine schnelle drahtlose Verbindung zu einer Bank 130 verwenden, um Bezahlvorgänge durchzuführen oder abzurufen.

Beispiele für Sensordatensätze, die zum Erhöhen des Zählers für die Anzahl der Siegelvorgänge führen, sind die folgenden:
Datensatz 1: Vorliegen von folgenden Bedingungen in einem kleinen Zeitfenster:
Alle drei Photodioden 74 A, 74B und 74C empfangen das LED-Licht kurz nacheinander, zuerst 74a. Der Empfang bei Photodiode 74A definiert den Zeitpunkt t0. Das bedeutet, das Oberteil 14 wird geschlossen, um einen Versiegelvorgang durchzuführen.

Motorstrom I >4,0 A, über einen Zeitraum von mehr als 0,2 Sek hinweg andauernd, mit der Bedeutung, dass der Soll-Auflagedruck für den Versiegelungsvorgang aufgebaut wurde.

Temperatur an der Siegelkontaktfläche 22, T1 >130°C,
Alle drei Photodioden 74 A, 74B und 74C empfangen das LED-Licht kurz nacheinander, zuerst 74C, dann 74 B, dann 74A. Das bedeutet, dass das Oberteil 14 wieder geöffnet wurde, um die versiegelte Schale zu entnehmen.

Datensatz 2: Wenn im Gegensatz zu Datensatz 1 ein Material mit niedrigerer Siegeltemperatur versiegelt werden soll, dann das Vorliegen von folgenden Bedingungen in einem kleinen Zeitfenster:
Alle drei Photodioden 74 A,74B und 74C empfangen das LED-Licht kurz nacheinander, zuerst 74a. Der Empfang bei Photodiode 74A definiert den Zeitpunkt t0. Das bedeutet, das Oberteil 14 wird geschlossen, um einen Versiegelvorgang durchzuführen.

Motorstrom I > 4,0 A, über einen Zeitraum von mehr als 0,2 Sek hinweg andauernd, mit der Bedeutung, dass der Soll-Siegeldruck für den Versiegelungsvorgang aufgebaut wurde.

Temperatur an der Siegelkontaktfläche 22, T1 >115°C,
Alle drei Photodioden 74 A, 74B und 74C empfangen das LED-Licht kurz nacheinander, zuerst 74C, dann 74 B, dann 74A. Das bedeutet, dass das Oberteil 14 wieder geöffnet wurde, um die versiegelte Schale zu entnehmen.

Ein Zähler in der Auswerteeinheit 80 berechnet aus den eingegangenen und ausgewerteten Sensorsignalen die aktuelle Anzahl von Siegelvorgängen, die immer nur hochgezählt wird. Ebenso gespeichert wird als redundante Information die Anzahl der noch nicht abgerechneten Siegelvorgänge.

Figur 4 zeigt ein beispielhaftes Ablaufdiagramm mit Schritten zur Ausführung in der Auswertelogik 80 und dem Steuerkreis 82 in dem Siegelgerät gemäß Ausführungsbeispiel.

Im Normalbetrieb wird mit ergänzendem Bezug zu Figur 3 ständig der Status im Feld 98 des Speichers überwacht und geprüft, Schritt 302, ob das Deaktivierungsbit auf ON gesetzt worden ist. Im Normalfall steht es auf OFF und das Gerät ist aktiv und betriebsbereit. Dann werden die Sensorsignale kontinuierlich überwacht, Schritt 304, und mit einer vorgebbaren Samplefrequenz von beispielsweise 20 Hertz ausgelesen, deren zeitlicher Verlauf in einem Zeitfenster von etwa 1 Sekunde gespeichert. In diesem Zeitfenster werden die Sensorsignale laufend ausgewertet und geprüft, Schritt 306, ob ein Siegelvorgang detektiert werden soll oder nicht. Die Kriterien für die Auswertung der Sensorsignale wurden weiter oben beispielhaft erwähnt.

Wenn ein Siegelvorgang als solcher von der Auswertelogik 80 erkannt worden ist, so wird er abgespeichert, indem die Gesamtanzahl der Siegelvorgänge um 1 erhöht wird, Schritt 308, und die Anzahl der unbezahlten Siegelvorgänge ebenfalls um 1 erhöht wird. Die Felder 94 und 96 werden inkrementiert um 1. Das gespeicherte Zeitfenster wird laufend wieder neu durch die jeweils neu hereinkommenden Werte überschrieben.

Wenn auf diese Art im konkreten Beispiel mehr als 500 neue, noch nicht abgerechnete Siegelvorgänge erfasst worden sind, wird ein neuer Abrechnungsprozess in Gang gesetzt. Hierzu überträgt die Sendeeinheit 100 die bisherige Gesamtanzahl der Siegelvorgänge aus Feld 94 und die seit der letzten Abrechnung neu hinzugekommenen aus Feld 96 samt der zugehörigen IDs aus Feld 92 an die App 110 im Smartphone des Gerätebenutzers, Schritt 320.

Die App 110 sendet diese Informationen zusammen mit den vorgenannten IDs aus Feld 92 für Benutzer und Gerät weiter an den Webserver 120 des Gerätelieferanten. Dieser prüft die Daten auf Plausibilität und leitet einen Abbuchungsvorgang ein, bei dem ein bestimmter Geldbetrag gemäß einem vereinbarten Nutzungsentgelt pro Versiegelungsvorgang vom Bankkonto des Benutzers abgebucht wird.

Nachdem die Abbuchung erfolgt ist, wird ein "aktuell- bezahlt"-bit in der Abrechnungssoftware am Webserver 120 gesetzt. Diese Information wird vom Webserver 120 an die App 110 des Benutzers gesendet. Die App 110 des Benutzers sendet dann ein Freigabesignal an die Sende-Empfangseinheit 100 am Siegelgerät. Das Freigabesignal verhindert, dass das Siegelgerät von dem darin integrierten Steuerkreis nach einer vorgegebenen Zeitspanne von der Auswertelogik 80 und dem Steuerkreis 82 automatisch deaktiviert wird.

Weiter wird das Feld 96, das die unbezahlten Bits speichert auf den Wert gesetzt, der sich als Differenz aus dem aktuellen Wert und der Anzahl der zuletzt bezahlten Versiegelungsvorgängen ergibt, denn in dem Zeitraum zwischen Ingangsetzen des Bezahlvorgangs und dem Empfangen des Freigabesignals am Gerät darf das Gerät weiter benutzt werden, wobei beide Felder 94 und 96 wie beschrieben immer hochgesetzt werden, wenn ein Siegelvorgang erfasst wird.

Das Freigabesignal, das vom Webserver 120 an die App 110 und von der App 110 auf die Sende-Empfangseinheit 100 im Microcontroller des Siegelgerätes gesendet wird, ist verschlüsselt und wird nach einer nur dem Gerätelieferanten bekannten Vorschrift als eigener Datensatz gebildet. Die App 110 gibt den Datensatz an die Auswertelogik 80 weiter, wo er entschlüsselt und decodiert wird. Wenn der decodierte Datensatz mit dem erwarteten Datensatz übereinstimmt, bleibt das Deaktivierbit auf OFF, und damit das Gerät betriebsbereit, und die Sensorsignale werden weiter beobachtet, Schritt 304. Andernfalls, bei Nicht-übereinstimmung, ist ein Manipulationsversuch zu erwarten. Dann setzt die Auswertelogik das Deaktivierbit sofort auf ON, deaktiviert das Gerät, Schritt 332, und veranlasst die App 110, eine entsprechende Meldung an den Benutzer auszugeben. Dann geht es nur mit einem Reset weiter, wie es weiter unten beschrieben wird.

Wenn der Bezahlvorgang nicht erfolgreich abgeschlossen werden kann, aber kein Manipulationsversuch vorliegt, etwa weil das Bankkonto des Gerätebenutzers nicht die erforderliche Deckung aufweist, dann sendet der Web Server 120 einen bedingten Deaktivierungsbefehl an die App 110. Die App 110 erzeugt eine Ausgabe an den Benutzer und weist auf die mangelnde Deckung des Bankkontos und eine geduldete Überziehung von einer vorgebbaren Anzahl von beispielsweise 100 Siegelvorgängen hin. Der Web Server versucht in der Zwischenzeit periodisch eine erneute Abbuchung des geschuldeten Geldbetrages. Gelingt dies, so sendet der Webserver 120 das Freigabesignal an die App 110, was im Schritt 330 geprüft wird. Dann wird zu Schritt 302 verzweigt und das Gerät kann normal weiter benutzt werden.

Wenn jedoch nach einer vorgebbaren Zeitspanne von beispielsweise 3 Tagen oder 72 Stunden keine Abbuchung erfolgen kann, dann deaktiviert sich das Siegelgerät von selbst, Schritt 332, JA-Ausgang und wartet auf den Empfang eines Resetsignals, Schritt 334. Dann sendet der Web Server 120 einen Deaktivierungshinweis an die App 110. Die App 110 gibt dann eine Nachricht an den Benutzer aus, wonach mitgeteilt wird, dass das Siegelgerät mangels nicht gelungener Abbuchung deaktiviert worden ist. Der Benutzer kann dann sein Konto auffüllen und einen Resetvorgang initiieren, wenn sein Bankkonto wieder gedeckt ist. Der Resetvorgang wird nach Prüfung 340 eines empfangenen Resetsignals in einem Schritt 350 durchgeführt. Dabei setzt die Auswertelogik das Deaktivierungsbit in dem Feld 98 des Speichers im Siegelgerät auf OFF, das heißt, das Gerät ist wieder aktiviert.

Grundsätzlich kann der softwarebezogene Gegenstand der vorliegenden Erfindung in Hardware, Software oder einer Kombination aus beiden realisiert werden. Eine beliebige Art von Computersystem oder Computergeräten ist dafür geeignet, das erfindungsgemäße Verfahren ganz oder in Teilen durchzuführen.

Eine typische Hardware-Software-Kombination für die vorliegende Erfindung wäre ein in einem Siegelgerät integrierter, dort gekapselt eingebauter Microcontroller und ein Computerprogramm, das, wenn es in den Microcontroller geladen und ausgeführt wird, den Controller derart steuert, dass es das erfindungsgemäße Verfahren ganz oder in Teilen ausführt.

Eine weitere typische Hardware-Software-Kombination für die vorliegende Erfindung wäre eine in einem Smartphone installierte App, die mit dem Microcontroller des Siegelgerätes über Kabel, WLAN oder Bluetooth verbunden ist, die die Anzahl der erfassten Siegelvorgänge vom Controller gesendet bekommt und an einen Webserver weiterleitet, die vom Webserver Daten empfängt und sie an den Microcontroller im Siegelgerät weiterleitet, um das Siegelgerät derart zu steuern, dass es das erfindungsgemäße Verfahren ganz oder in Teilen ausführt.

Eine weitere typische Hardware-Software-Kombination für die vorliegende Erfindung wäre ein leistungsfähiger Webserver-Computer mit einem Computerprogramm, das, wenn es auf dem Webserver geladen und ausgeführt wird, den Webserver derart steuert, dass er das erfindungsgemäße Verfahren ganz oder in Teilen ausführt.

Die vorliegende Erfindung kann auch in ein Computerprogramm-Erzeugnis eingebettet sein, das sämtliche Merkmale enthält, die eine Implementierung der hierin beschriebenen Verfahren ermöglichen, und die, wenn sie in ein Computersystem geladen wird, dazu imstande ist, diese Verfahren auszuführen, wenn sie mit den aktuellen Daten versorgt wird.

Computerprogrammeinrichtungen oder Computerprogramme bedeuten im vorliegenden Kontext beliebige Ausdrücke in einer beliebigen Sprache oder Notation, oder einem beliebigen Code eines Satzes von Anweisungen, die ein System mit einer Informationsverarbeitungsmöglichkeit dazu veranlassen sollen, von den folgenden Funktionen:
Umsetzung in eine andere Sprache oder Notation oder einen anderen Code, Reproduktion in eine unterschiedliche materielle Form,
eine bestimmte entweder direkt oder nacheinander oder beide durchzuführen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Die elektronische Auswerteeinheit im Siegelgerät kann als digital-elektronischer Schaltkreis auf einer Platine fest verdrahtet implementiert sein. Sie kann auch als komfortabel programmierbarer Microcontroller implementiert sein.

Anstelle eines elektrisch betriebenen Drückmechanismus kann auch ein manuell zu bewegender Drückmechanismus verwendet werden. Dem Bediener kann dann - gesteuert über die Signale des vorbeschriebenen Drucksensors - eine akustische, optische oder haptische Rückmeldung über entsprechende Aktoren gegeben werden, die ihm mitteilt, in welchem Umfang er den Druck ausübt, und wann der Druck ausreichend ist für den individuellen Siegelvorgang. So kann ihm auch mitgeteilt werden, dass ein maximal zulässiger Druck überschritten worden ist und der Versiegelvorgang ggf. mit einer neuen Folie wiederholt werden muss.

Anstelle einer Heizpatrone sind auch andere Heizsysteme verwendbar, beispielsweise ein Rohrheizkörper, eine Heizmatte, oder andere im Stand der Technik bekannte elektrische Heizsysteme.

Anstelle der Sende- und Empfangseinheit 100 und der mit ihr zusammenwirkenden Smartphone App 110 kann auch eine Hardware- Softwareeinheit verwendet werden, die mit der Auswertelogik 80 des erfindungsgemäßen Siegelgerätes über entsprechende I/O-Schnittstellen der Auswertelogik 80 per Kabel verbunden ist, und als Weiterleitungskomponente aller wichtigen Informationen zwischen Siegelgerät und einem vorhandenen WLAN-Router oder als WLAN-Adapter zwischen Siegelgerät und dem Internet betrieben wird.

Anstelle des beschriebenen Smartphones können auch andere Endgeräte wie tablets, Notebooks, oder embedded-Systeme mit der benötigten Funktionalität an Bord verwendet werden.

Die Maßnahmen, die von der Auswertelogik in Kooperation mit dem Steuerkreis für das Siegelgerät bei mangelnder Bezahlung durchgeführt werden können, sind sehr breit variierbar. Das Gerät kann beispielsweise nervenaufreibende Warnsignale unterschiedlichster Art ausgeben. Die den Heizstrom dosiert abgebende Aufheizeinheit kann gekapselt verbaut sein und deaktiviert werden, so dass sie nicht leicht manipuliert werden kann. Alle wichtigen technischen Komponenten können mit einem Aufbruchsiegel versehen sein, bei dessen Verletzung ein Manipulationsversuch leicht abgelesen werden kann. Eine Kamera kann in das Gerät integriert sein, die ein Foto erzeugt, das an den Webserver gesendet wird, wenn bestimmte Kabelverbindungen unterbrochen werden. Das kann insbesondere dann sinnvoll sein, wenn der Elektromotor bei einer Manipulation des Geräts abgeklemmt wird. Entsprechend kann das Unterbrechen verschiedener Kabelverbindungen im Gerät auch detektiert werden.

Das erfindungsgemäße Siegelgerät und das entsprechende Verfahren zur Anwendung beim pay-per-use Versiegeln kann auch für Waren verwendet werden, die keine Lebensmittel sind.

Die genannten Verpackungseinheiten können auch aus beutelartigen oder kästchenartigen oder anders geformten Behältnissen als Unterteil und einer Verschlussfolie als Oberteil bestehen.

Die vorliegende Erfindung kann auch für Geräte verwendet werden, die einen anderen Verschlussvorgang als einen Siegelvorgang für eine Bedeckelung von Behältnissen benutzen. Als Beispiel sei ein Umbördelvorgang genannt, bei dem eine Verschlussfolie über einen hervorstehenden, abgerundeten Rand eines Behältnisses gezogen und daran festgedrückt wird. Hierbei werden spezifische Sensoren an spezifischen Orten am Gerät eingesetzt, die für die Sensierung eines Bördelvorgangs sensitiv sind, beispielsweise ein optischer Sensor, ein Drucksensor, der den Druck auf die Bördelfläche sensiert und falls notwendig, weitere Sensoren, die die Bewegung des Oberteils sensieren.

Schließlich können die Merkmale der Unteransprüche im Wesentlichen frei miteinander und nicht durch die in den Ansprüchen vorliegende Reihenfolge miteinander kombiniert werden, sofern sie unabhängig voneinander sind.

## Patentansprüche

1. Gerät (10) zum manuellen Verschließen von Verpackungseinheiten miteinander entlang einer vorgegebenen Kontur durch Versiegeln, mit einem vom Bediener des Gerätes beschickbaren Bereich zum Einlegen eines mit Lebensmitteln oder anderen Waren gefüllten Behältnisses, insbesondere einer Schale, und mit einem manuell bedienbaren Oberteil, das bei einem Verschließvorgang eine Verschlussfolie auf die Kontur drückt, **dadurch gekennzeichnet, dass** das Gerät:
eine Sensoreinrichtung mit einem oder mehreren Sensoren (50, 60, 70) aufweist, die dazu eingerichtet ist, die Durchführung eines Verschließvorgangs zu sensieren und dafür einen Satz Sensorsignale erzeugt,
eine Auswerteeinheit (80) aufweist, die dazu eingerichtet ist, aus den Sensorsignalen Daten zu gewinnen, die die Anzahl von tatsächlich durchgeführten Verschließvorgängen darstellen, und
eine Sendeeinheit (100) aufweist, die dazu eingerichtet ist, gemäß einem vorgebbaren Regelschema die durch die Auswertung ermittelte Anzahl von Verschließvorgängen an einen vorgegebenen Empfänger (110, 120) zu senden,
eine Empfangseinheit (100) aufweist, die dazu eingerichtet ist, Steuerdaten für das Gerät von dem vorgegebenen Empfänger (100, 120) zu empfangen,
wobei ein elektronischer Steuerkreis (82) im Gerät vorgesehen ist, der dazu eingerichtet ist, die Steuerdaten weiterzuverarbeiten und das Gerät den Steuerdaten entsprechend zu steuern, wobei
am Gerät technische Mittel vorhanden sind, bei Erreichen einer vorgegebenen Anzahl von Siegelvorgängen, die von dem Steuerkreis (82) zur Durchführung wenigstens eines der folgenden Schritte ansteuerbar sind:
1) Ausgabe eines vorgegebenen Warnsignals am Siegelgerät,
2) Verlangsamung oder Verhinderung einer Aufheizphase des Siegelgerätes,
3) Unterbrechung der Betriebsbereitschaft des Siegelgerätes.

2. Gerät (10) nach dem vorstehenden Anspruch 1, wobei die Empfangseinheit (100) dazu eingerichtet ist, mit einer App (10) auf einem Smartphone oder einem Tabletcomputer oder mit einem auf einem Computer installierten Anwendungsprogramm über einen oder mehrere vorgegebene Kanäle zu kommunizieren.

3. Verfahren zum Steuern von Siegelgeräten (10) nach Anspruch 1 durch eine Serverapplikation, enthaltend die Schritte:
a) Empfangen von Daten über die mit einem vorbestimmten Siegelgerät (10) durchgeführte Anzahl von Siegelvorgängen,
b) bei Erreichen einer vorgegebenen Anzahl von Siegelvorgängen, Durchführen eines oder mehrerer der folgenden Schritte:
b1) Einleitung eines Zahlungsvorgangs,
b2) Ausgabe eines vorgegebenen Warnsignals am Siegelgerät,
b3) Verlangsamung oder Verhinderung einer Aufheizphase des Siegelgerätes,
b4) Unterbrechung der Betriebsbereitschaft des Siegelgerätes.

4. Verfahren zum Steuern von Siegelgeräten nach Anspruch 1 durch eine Auswerte- und Steuerlogik (80, 82), die in einem Siegelgerät implementiert ist, enthaltend die Schritte:
a) laufendes Überwachen (304) einer Mehrzahl von Signalen aus einer entsprechenden Mehrzahl an Sensoren (50, 60, 70), die für den manuellen Betrieb des Siegelgerätes typisch sind,
b) laufendes Auswerten der Sensorsignale nach vorgegebenen Kriterien um Siegelvorgänge zu erfassen,
c) Zählen (308) der erfassten Siegelvorgänge,
d) Senden (320) einer Information, aus der geschlossen werden kann, dass eine vorbestimmte Anzahl von Siegelvorgängen durchgeführt worden ist, an eine App (110) zum Zwecke der Initiierung eines Zahlungsvorgangs, der der erfassten Nutzung des Siegelgerätes (10) entspricht.

5. Verwendung einer App (110) zur Kommunikation mit einer Steuer- und Auswertelogik (80, 82) für ein Siegelgerät (10) nach Anspruch 1 zur Durchführung der folgenden Schritte:
a) Empfangen einer Information, die der durchgeführten Anzahl an Versiegelungsvorgängen entspricht, die mit dem Siegelgerät durchgeführt worden sind, das mit einer am Siegelgerät vorhandenen Sende-Empfangseinheit (100) mit der App (110) gekoppelt ist,
b) Empfangen eines Freigabesignals von einem Webserver,
c) Senden des Freigabesignals an die Sende-Empfangseinheit (100) des mit der App (110) gekoppelten Siegelgerätes (10).

6. Computerprogramm, enthaltend Codeabschnitte zum Ausführen entsprechender Schritte des Verfahrens nach Anspruch 3 oder 4 zum Steuern von Siegelgeräten nach Anspruch 1, wenn es zur Ausführung geladen wird.

7. Computerprogrammprodukt, gespeichert auf einem computerlesbaren Medium, enthaltend eine computerlesbare Programmeinrichtung, um einen Computer oder einen Microcontroller dazu zu veranlassen, das Verfahren gemäß einem der vorstehenden Ansprüche 3 oder 4 zum Steuern von Siegelgeräten nach Anspruch 1 durchzuführen, wenn die Programmeinrichtung von dem Computer oder dem Microcontroller ausgeführt wird.

8. Verwendung eines Nachrüstsatzes zum Nachrüsten eines Siegelgerätes (10) zum manuellen Verschließen insbesondere zum Versiegeln von Verpackungseinheiten miteinander entlang einer vorgegebenen Kontur, mit einem vom Bediener des Gerätes beschickbaren Bereich zum Einlegen eines mit Lebensmitteln oder anderen Waren gefüllten Behältnisses, insbesondere einer Schale, und mit einem manuell bedienbaren Oberteil (14), das bei einem Verschließvorgang eine Verschlussfolie auf die Kontur drückt, **dadurch gekennzeichnet, dass** der Nachrüstsatz
eine Sensoreinrichtung mit einem oder mehreren Sensoren (50, 60. 70) aufweist, die dazu eingerichtet ist, die Durchführung eines Verschließvorgangs zu sensieren und dafür einen Satz Sensorsignale erzeugt,
eine Auswerteeinheit (80) aufweist, die dazu eingerichtet ist, aus den Sensorsignalen Daten zu gewinnen, die die Anzahl von tatsächlich durchgeführten Verschließvorgängen darstellen, und
eine Sendeeinheit (100) aufweist, die dazu eingerichtet ist, gemäß einem vorgebbaren Regelschema die durch die Auswertung ermittelte Anzahl von Verschließvorgängen an einen vorgegebenen Empfänger zu senden (320),
eine Empfangseinheit (100) aufweist, die dazu eingerichtet ist, Steuerdaten für das Gerät (10) von dem vorgegebenen Empfänger (110) zu empfangen,
wobei ein elektronischer Steuerkreis (82) im Gerät vorgesehen ist, der dazu eingerichtet ist, die Steuerdaten weiterzuverarbeiten und das Gerät (10) den Steuerdaten entsprechend zu steuern, wobei
der Nachrüstsatz technische Mittel enthält, bei Erreichen einer vorgegebenen Anzahl von Siegelvorgängen, die von dem Steuerkreis (82) zur Durchführung wenigstens eines der folgenden Schritte ansteuerbar sind:
1) Ausgabe eines vorgegebenen Warnsignals am Siegelgerät,
2) Verlangsamung oder Verhinderung einer Aufheizphase des Siegelgeräte,
3) Unterbrechung der Betriebsbereitschaft des Siegelgerätes.

## Claims

1. Device (10) for manually closing packaging units with one another along a predefined contour by means of sealing, having a region which can be loaded by the operator of the device and is intended for the insertion of a container, in particular a shell, filled with food or other goods, and having a manually operable upper part which presses a closure film onto the contour during a closing operation, **characterized in that** the device:
has a sensor device which has one or more sensors (50, 60, 70) and is configured to sense the performance of a closing operation and generates a set of sensor signals for this,
has an evaluation unit (80) which is configured to use the sensor signals to obtain data representing the number of closing operations which have actually been carried out, and
has a transmitting unit (100) which is configured to transmit the number of closing operations, as determined by the evaluation, to a predefined receiver (110, 120) according to a predefinable control scheme,
has a receiving unit (100) which is configured to receive control data for the device from the predefined receiver (100, 120),
wherein an electronic control circuit (82) is provided in the device and is configured to process the control data further and to control the device according to the control data, wherein
technical means are provided on the device and can be controlled by the control circuit (82) to carry out at least one of the following steps when a predefined number of sealing operations is reached:
1) outputting a predefined warning signal at the sealing device,
2) slowing down or preventing a heating phase of the sealing device,
3) interrupting the operational readiness of the sealing device.

2. Device (10) according to the preceding Claim 1, wherein the receiving unit (100) is configured to communicate with an app (10) on a smartphone or a tablet computer or with an application program installed on a computer via one or more predefined channels.

3. Method for controlling sealing devices (10) according to Claim 1 by means of a server application, containing the steps of:
a) receiving data relating to the number of sealing operations carried out with a predetermined sealing device (10),
b) carrying out one or more of the following steps when a predefined number of sealing operations is reached:
b1) initiating a payment operation,
b2) outputting a predefined warning signal at the sealing device,
b3) slowing down or preventing a heating phase of the sealing device,
b4) interrupting the operational readiness of the sealing device.

4. Method for controlling sealing devices according to Claim 1 by means of an evaluation and control logic unit (80, 82) implemented in a sealing device, containing the steps of:
a) continuously monitoring (304) a plurality of signals from a corresponding plurality of sensors (50, 60, 70) which are typical of the manual operation of the sealing device,
b) continuously evaluating the sensor signals according to predefined criteria in order to capture sealing operations,
c) counting (308) the captured sealing operations,
d) transmitting (320) information, from which it can be inferred that a predetermined number of sealing operations have been carried out, to an app (110) for the purpose of initiating a payment operation corresponding to the captured use of the sealing device (10).

5. Use of an app (110) for communicating with a control and evaluation logic unit (80, 82) for a sealing device (10) according to Claim 1 for the purpose of carrying out the following steps:
a) receiving information corresponding to the number of sealing operations which have been carried out with the sealing device which is coupled to the app (110) by way of a transceiver unit (100) which is present on the sealing device,
b) receiving an enable signal from a web server,
c) transmitting the enable signal to the transceiver unit (100) of the sealing device (10) that is coupled to the app (110).

6. Computer program containing code sections for carrying out corresponding steps of the method according to Claim 3 or 4 for controlling sealing devices according to Claim 1 when it is loaded for execution.

7. Computer program product, stored on a computer-readable medium, containing a computer-readable program device in order to cause a computer or a microcontroller to carry out the method according to either of the preceding Claims 3 and 4 for controlling sealing devices according to Claim 1 when the program device is executed by the computer or the microcontroller.

8. Use of a retrofit kit for retrofitting a sealing device (10) for manually closing, in particular sealing, packaging units with one another along a predefined contour, having a region which can be loaded by the operator of the device and is intended for the insertion of a container, in particular a shell, filled with food or other goods, and having a manually operable upper part (14) which presses a closure film onto the contour during a closing operation, **characterized in that** the retrofit kit
has a sensor device which has one or more sensors (50, 60, 70) and is configured to sense the performance of a closing operation and generates a set of sensor signals for this,
has an evaluation unit (80) which is configured to use the sensor signals to obtain data representing the number of closing operations which have actually been carried out, and
has a transmitting unit (100) which is configured to transmit (320) the number of closing operations, as determined by the evaluation, to a predefined receiver according to a predefinable control scheme,
has a receiving unit (100) which is configured to receive control data for the device (10) from the predefined receiver (110),
wherein an electronic control circuit (82) is provided in the device and is configured to process the control data further and to control the device (10) according to the control data, wherein
the retrofit kit contains technical means which can be controlled by the control circuit (82) to carry out at least one of the following steps when a predefined number of sealing operations is reached:
1) outputting a predefined warning signal at the sealing device,
2) slowing down or preventing a heating phase of the sealing device,
3) interrupting the operational readiness of the sealing device.

## Revendications

1. Appareil (10) de fermeture manuelle d'unités d'emballage entre elles suivant un contour spécifié par scellement, ledit appareil comprenant une zone pouvant être alimentée par l'opérateur de l'appareil et destiné à l'insertion d'un récipient rempli d'aliments ou d'autres produits, notamment un bol, et une partie supérieure qui peut être actionnée manuellement et qui presse un film de fermeture sur le contour lors d'un processus de fermeture, **caractérisé en ce que** l'appareil comporte :
un dispositif de détection qui comprend un ou plusieurs capteurs (50, 60, 70) et qui est conçu pour détecter l'exécution d'un processus de fermeture et générer pour cela un ensemble de signaux de capteurs,
une unité d'évaluation (80) qui est conçue pour obtenir à partir des signaux de capteurs des données qui représentent le nombre de processus de fermeture réellement effectués, et
une unité d'émission (100) qui est conçue pour envoyer le nombre de processus de fermeture déterminé par l'évaluation à un récepteur spécifié (110, 120) conformément à un modèle de règles spécifiables,
une unité de réception (100) qui est conçue pour recevoir du récepteur spécifié (100, 120) des données de commande de l'appareil,
un circuit de commande électronique (82) étant prévu dans l'appareil et étant conçu pour traiter ultérieurement les données de commande et commander l'appareil conformément aux données de commande,
des moyens techniques étant prévus au niveau de l'appareil qui, lorsqu'un nombre spécifié de processus de scellement est atteint, peuvent être commandés par le circuit de commande (82) pour effectuer l'une au moins des étapes suivantes :
1) délivrer un signal d'avertissement spécifié à l'appareil de scellement,
2) ralentir ou empêcher une phase de chauffage de l'appareil de scellement,
3) interrompre la disponibilité opérationnelle de l'appareil de scellement.

2. Appareil (10) selon la revendication 1 précédente, l'unité de réception (100) étant conçue pour communiquer avec une application (10) d'un Smartphone ou d'une tablette informatique ou avec un programme d'application installé sur un ordinateur par le biais d'un ou plusieurs canaux spécifiés.

3. Procédé de commande d'appareils de scellement (10) selon la revendication 1 par une application serveur, ledit procédé comprenant les étapes suivantes :
a) recevoir des données sur le nombre de processus de scellement effectués avec un appareil de scellement prédéterminé (10),
b) lorsqu'un nombre spécifié de processus de scellement est atteint, effectuer une ou plusieurs des étapes suivantes :
b1) lancer un processus de paiement,
b2) délivrer un signal d'avertissement spécifié au niveau de l'appareil de scellement,
b3) ralentir ou empêcher une phase de chauffage de l'appareil de scellement,
b4) interrompre la disponibilité opérationnelle de l'appareil de scellement.

4. Procédé de commande d'appareils de scellement selon la revendication 1 par une logique d'évaluation et de commande (80, 82) qui est mise en œuvre dans un appareil de scellement, ledit procédé comprenant les étapes suivantes :
a) surveiller en continu (304) une pluralité de signaux provenant d'une pluralité correspondante de capteurs (50, 60, 70) typiques du fonctionnement manuel de l'appareil de scellement,
b) évaluer en continu les signaux de capteurs selon des critères spécifiés afin de détecter des processus de scellement,
c) compter (308) les processus de scellement détectés,
d) envoyer (320) une information, qui permet de déduire qu'un nombre prédéterminé de processus de scellement a été effectué, à une application (110) afin de lancer un processus de paiement qui correspond à l'utilisation détectée de l'appareil de scellement (10) .

5. Utilisation d'une application (110) de communication avec une logique de commande et d'évaluation (80, 82) d'un appareil de scellement (10) selon la revendication 1 pour réaliser les étapes suivantes :
a) recevoir une information, qui correspond au nombre de processus de scellement qui ont été effectués avec l'appareil de scellement qui est couplé à l'application (110) au moyen d'une unité d'émission-réception (100) présente au niveau de l'appareil de scellement,
b) recevoir un signal d'activation d'un serveur Web,
c) envoyer le signal d'activation à l'unité d'émission-réception (100) de l'appareil de scellement (10) couplé à l'application (110).

6. Logiciel contenant des portions de code destinées à effectuer des étapes correspondantes du procédé selon la revendication 3 ou 4 afin de commander des appareils de scellement selon la revendication 1 lorsque ledit logiciel est chargé en vue de l'exécution.

7. Progiciel mémorisé sur un support lisible par ordinateur, ledit progiciel contenant un module de programme lisible par ordinateur pour ordonner à un ordinateur ou un microcontrôleur de mettre en œuvre le procédé selon l'une des revendications 3 ou 4 précédentes afin de commander des appareils de scellement selon la revendication 1, lorsque le module de programme est exécuté par l'ordinateur ou le microcontrôleur.

8. Utilisation d'un ensemble d'équipement destiné à équiper un appareil de scellement (10) destiné à fermer manuellement, notamment sceller des unités d'emballage entre elles suivant un contour spécifié, ledit ensemble comprenant une zone pouvant être alimentée par l'opérateur de l'appareil et destinée à l'insertion d'un récipient rempli d'aliments ou d'autres produits, en particulier un bol, et une partie supérieure (14) qui peut être actionnée manuellement et qui presse un film de fermeture sur le contour lors d'un processus de fermeture, **caractérisé en ce que** l'ensemble d'équipement comporte
un dispositif de détection qui comprend un ou plusieurs capteurs (50, 60, 70) et qui est conçu pour détecter l'exécution d'un processus de fermeture et générer pour cela un ensemble de signaux de capteurs,
une unité d'évaluation (80) qui est conçue pour obtenir à partir des signaux de capteurs des données qui représentent le nombre de processus de fermeture réellement effectués, et
une unité d'émission (100) qui est conçue pour envoyer (320) le nombre de processus de fermeture déterminé par l'évaluation à un récepteur spécifié conformément à un modèle de règles spécifiables,
une unité de réception (100) qui est conçue pour recevoir du récepteur spécifié (110) des données de commande de l'appareil (10),
un circuit de commande électronique (82) étant prévu dans l'appareil et étant conçu pour traiter ultérieurement les données de commande et commander l'appareil (10) conformément aux données de commande, l'ensemble d'équipement contenant des moyens techniques qui, lorsqu'un nombre spécifié de processus de scellement est atteint, peuvent être commandés par le circuit de commande (82) pour effectuer l'une au moins des étapes suivantes :
1) délivrer un signal d'avertissement spécifié à l'appareil de scellement,
2) ralentir ou empêcher une phase de chauffage de l'appareil de scellement,
3) interrompre la disponibilité opérationnelle de l'appareil de scellement.
